# DEMANDE DE BREVET EUROPEEN

(11) **EP 0 708 264 A1**
(43) Date de publication de la demande: **24.04.1996**
(21) Numéro de dépôt: 95402320.6
(22) Date de dépôt: 18.10.1995
(51) Int. Cl.: F16D 13/75

(54) **Dispositif de commande d'embrayage à rattrapage d'usure**

(30) Priorité: 18.10.1994 FR 9412393
(71) Demandeur: Société Anonyme dite: REGIE NATIONALE DES USINES RENAULT, F-92109 Boulogne Billancourt (FR)
(72) Inventeur: Bourhis, Paul, F-94230 Cachan (FR); Fassot, Gilbert, F-92500 Rueil Malmaison (FR)

(57) **Abrégé**

Dispositif de commande d'embrayage par câble à rattrapage d'usure, comportant une pédale d'embrayage (1) pivotant sur une partie fixe (3) du châssis du véhicule autour d'un premier axe (2) entre une butée basse (3a) en fin de course de débrayage et une butée haute (12) en position de repos, un secteur cranté (5b) relié au câble de débrayage (4) et pivotant sur la pédale (1) autour d'un second axe de rotation (6), un cliquet (9) articulé autour d'un troisième axe (10) sur la pédale (1) et rencontrant la denture (8) de l'élément cranté (5b) lors du débrayage de façon à relier cinématiquement la pédale (1) au câble dans une position déterminée notamment par l'état d'usure de l'embrayage, et un moyen de rappel (11) de la pédale (1) et du secteur cranté (5b) dans leurs positions de repos, caractérisé en ce que l'élément de secteur cranté (5b) est relié élastiquement au câble (4).

## Description

La présente invention concerne une commande d'embrayage par câble, notamment pour véhicule automobile. Plus précisément, elle a pour objet un dispositif de commande d'embrayage du type comportant une pédale d'embrayage reliée par un câble au mécanisme d'embrayage du véhicule, un moyen de rappel de la pédale dans sa position de repos, et une butée d'arrêt de la pédale dans ladite position.

Par la publication FR 2 571 868 au nom de la demanderesse, on connaît une pédale pivotante de commande d'embrayage portant un secteur denté d'encliquetage monté à pivotement autour d'un axe porté par la pédale, distinct du propre axe de pivotement de celle-ci, un moyen de commande du secteur denté vers une position de repos, un cliquet monté en rotation sur la pédale, et un moyen sollicitant le cliquet en engagement avec la denture du secteur d'encliquetage. Selon une disposition classique, le cliquet coopère également avec une butée de relevage portée par une partie fixe du véhicule, de façon à être dégagée du secteur d'encliquetage lorsque la pédale est dans sa position de repos, et à rencontrer à chaque débrayage le secteur d'encliquetage dans une position déterminée par l'état d'usure des garnitures de friction de l'embrayage.

Selon cette publication, le secteur articulé sur la pédale est immobilisé par rapport à celle-ci par un cliquet au début de la course de débrayage, dans une position déterminée par la consigne d'effort du ressort agissant sur le secteur denté. Celui-ci se dégage du cliquet lors du retour de la pédale dans sa position haute grâce à la butée de relevage mentionnée ci-dessus. Lors de la phase d'approche du secteur denté vers le cliquet, aucune relation cinématique n'existe entre ces deux éléments. La position angulaire du secteur sur la pédale lors de l'encliquetage est donc déterminée par l'état du ressort de rappel du secteur vers le cliquet, et par l'état d'usure de l'embrayage.

Bien que le système de commande d'embrayage décrit dans la publication FR 2 571 868 fonctionne de façon satisfaisante dans la plupart des cas, l'engrènement du secteur denté sur le cliquet peut être retardé en raison de leur position relative en phase d'approche et de circonstances particulières pouvant conduire, dans une situation limite, à l'épuisement complet de la course de la pédale, sans que le débrayage soit réalisé.

L'engrènement du secteur sur le cliquet peut notamment être perturbé lorsque les dents du secteur et celles du cliquet effectuent leur approche dans la zone externe, dite zone de congé des dents, correspondant aux extrémités de leurs sommets. En effet, lorsque le contact entre les dents s'établit effectivement au niveau des congés des dents concernées, la poussée du cliquet sur le secteur est orientée sensiblement dans la direction de l'axe de rotation de celui-ci.

Le moment exercé par le cliquet sur le secteur peut alors être insuffisant pour faire tourner ce dernier. Au cas où l'immobilisation du secteur sur le cliquet est le résultat d'un tel "faux verrouillage", correspondant simplement à l'immobilisation relative de ces deux éléments par contact mutuel de leurs sommets sans véritable encliquetage, leur équilibre relatif, peut être suffisamment stable pour assurer la mise en rotation du secteur, mais risque d'être brusquement dépassé lors de l'augmentation de l'effort imposé au cliquet par l'utilisateur en poursuivant l'enfoncement de sa pédale. Le déséquilibre brutal du système se traduit alors par la libération du cliquet et son éjection à l'écart du secteur. Si, sous l'action de son ressort de rappel, le cliquet est ramené sur la denture du secteur dans une position telle que l'approche des dentures s'effectue toujours au niveau des congés, l'encliquetage sera à nouveau inopérant, et la répétition successive de la séquence résumée ci-dessus, peut conduire au défilement de toute la course de la pédale, sans débrayer.

Pour réduire les risques de décrochage des dentures lors du débrayage, il est important de veiller au parallélisme exact des lignes fictives des sommets de denture. En effet, le non parallélisme des sommets de denture augmente considérablement la probabilité d'une prise de contact dans la zone des congés plutôt que sur les flancs des dents. Etant donné que le non parallélisme des sommets de denture est principalement imputable aux défauts de coaxialité des axes de rotation du cliquet et du secteur, on comprend que les risques de décrochage des dentures peuvent être minimisés en veillant à la précision du montage de ces axes de rotation, et au dimensionnement exact des largeurs de dentures.

On sait par ailleurs qu'il existe dans un mécanisme tel que celui qui est décrit dans la publication FR 2 571 868 des frottements susceptibles de paralyser l'engrènement, au niveau du contact entre le cliquet et la butée haute, de l'axe de rotation du cliquet, de l'axe de rotation du secteur, du glissement du câble de débrayage dans sa gaine, et du contact entre les dentures du cliquet et du secteur. Un graissage approprié du mécanisme permet bien entendu de réduire les risques de grippage dus aux frottements. Cependant, il ne permet pas de supprimer toute éventualité d'un décrochage en série des dentures, pouvant conduire à la situation de "pédale au plancher" sans débrayage.

L'augmentation de la sécurité de l'encliquetage au sein d'un pédalier de commande d'embrayage à rattrapage d'usure par secteur cranté et cliquet intégrés, fait à ce jour l'objet de divers développements. La publication FR 2 683 921 au nom de la demanderesse propose à ce sujet de monter sur la pédale deux cliquets indépendants, accrochant respectivement une première et une seconde piste décalées d'une demi-dent. Grâce à cette disposition, l'approche des cliquets vers le secteur place toujours l'un d'eux dans une situation favorable à son engrènement véritable. La répétition des décrochages est rendue impossible par le système du cliquet. En revanche, l'approche d'un cliquet sur le secteur au niveau de la zone des congés et le décrochage ponctuel des dentures à cette occasion est toujours possible. Selon l'énergie libérée par le décrochage des dentures, l'utilisateur perçoit alors un bruit sec et une sensation de craquement, difficilement acceptables en terme de qualité et de confort de conduite.

La présente invention vise à favoriser en toutes circonstances les conditions d'engrènement complet des dentures, au sein d'un dispositif de commande d'embrayage à rattrapage d'usure sur la pédale.

Elle concerne un dispositif de commande d'embrayage par câble à rattrapage d'usure, comportant une pédale d'embrayage pivotant sur une partie fixe du châssis du véhicule autour d'un premier axe entre une butée basse en fin de course de débrayage et une butée haute en position de repos, un secteur cranté relié au câble de débrayage et pivotant sur la pédale autour d'un second axe de rotation, un cliquet articulé autour d'un troisième axe sur la pédale et rencontrant la denture de l'élément cranté lors du débrayage de façon à relier cinématiquement la pédale au câble dans une position déterminée notamment par l'état d'usure de l'embrayage, et un moyen de rappel de la pédale et du secteur cranté dans leurs positions de repos. Ce dispositif est caractérisé en ce que l'élément de secteur cranté est relié élastiquement au câble.

Selon un mode de réalisation de l'invention, l'élément de secteur cranté est relié élastiquement à un élément spécifique accroché à l'extrémité du câble de débrayage.

Selon un mode de réalisation de l'invention, l'élément spécifique est un élément de secteur, tournant sur la pédale autour du même axe de rotation que le secteur cranté.

Selon un mode de réalisation de l'invention, les deux éléments de secteur, sont reliés par un élément de liaison élastique rappelant élastiquement ces derniers à l'écart l'un de l'autre.

Selon un mode de réalisation de l'invention, l'élément élastique de liaison est disposé entre deux faces latérales des éléments de secteur, de façon à être comprimé entre ces derniers lors de l'engrènement du cliquet sur le secteur.

Selon un mode de réalisation de l'invention, l'élément élastique de liaison est constitué par une partie flexible réunissant les deux éléments de secteur au voisinage de leur axe de rotation commun.

Selon un mode de réalisation de l'invention, le moyen de rappel assure l'engrènement du cliquet sur le secteur cranté lors du débrayage.

Selon un mode de réalisation de l'invention, l'appui du cliquet sur la butée haute assure le dégagement du cliquet à l'écart du secteur cranté lors de l'embrayage.

Selon un mode de réalisation de l'invention, les deux éléments de secteur sont en appui mutuel après l'engrènement du cliquet sur la denture.

L'invention sera mieux comprise à la lecture de la description suivante de deux modes de réalisation particuliers de celle-ci, en liaison avec les dessins annexés sur lesquels :
- la figure 1 se rapporte à l'état de la technique,
- les figures 2A et 2B mettent en évidence le fonctionnement du dispositif proposé,
- les figures 3A, 3B et 3C illustrent un premier mode de réalisation de l'invention, et
- les figures 4A, 4B et 4C illustrent un second mode de réalisation de celle-ci.

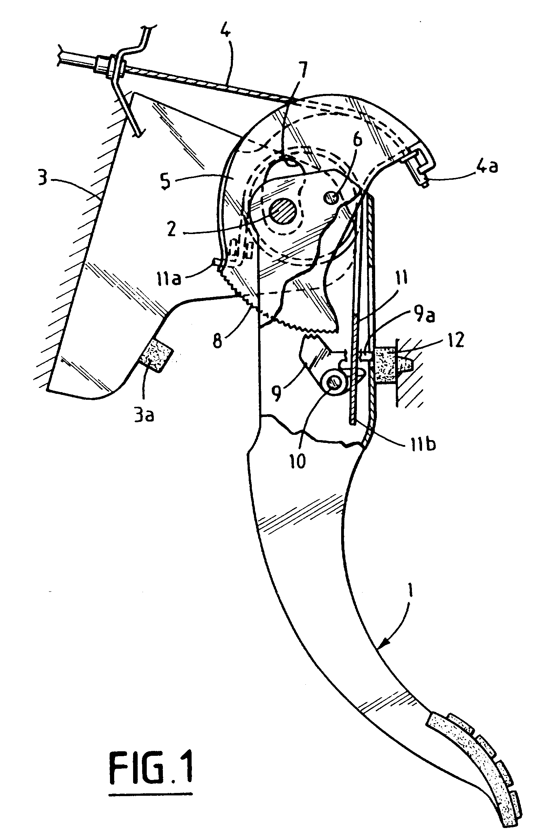

Sur la figure 1, on a représenté une pédale d'embrayage 1 de type connu pivotant autour d'un premier axe 2 sur un élément de châssis 3 présentant une butée basse 3a de pédale en fin de course de débrayage. Le câble de débrayage 4 est accroché par son extrémité 4a sur un secteur 5 pivotant sur la pédale 1 autour d'un second axe 6 distinct du premier axe 2. Le secteur 5 présente une lumière 7 de forme allongée et incurvée, ménagée autour de la trajectoire du premier axe 2 vis-à-vis du secteur 5, de façon à autoriser le débattement de ce dernier autour de la pédale. Le secteur 5 est cranté sur une partie de sa périphérie. Sa denture 8 fait face à celle d'un cliquet 9 articulé autour d'un troisième axe 10 sur la pédale 1. De façon classique, la pédale 1 et le secteur 5 sont rappelés par un ressort unique 11 vers une position de repos, dans laquelle la pédale 1 est en appui contre sa butée haute 12, solidaire du châssis. La butée haute 12 reçoit également le talon 9a du cliquet 9 en fin de course d'embrayage, de façon à assurer le relevage de ce dernier à l'écart de la denture 8 du secteur 5.

Conformément à la publication FR 2 571 868, le ressort 11 assure d'une part le rappel de la pédale 1 et du secteur 5 vers leur position de repos, et d'autre part la commande d'engagement du cliquet 9 sur la denture d'encliquetage 8 du secteur 5, lorsque le talon 9a est dégagé de la butée haute 12. Le ressort 11 comporte à cet effet deux branches extrêmes, dont l'une 11a est accrochée sur le secteur denté 5, et l'autre 11b est montée en tension au travers du cliquet 9 pour le solliciter en rotation autour de son axe de pivotement 10, dans le sens de son engagement avec la denture d'encliquetage 8.

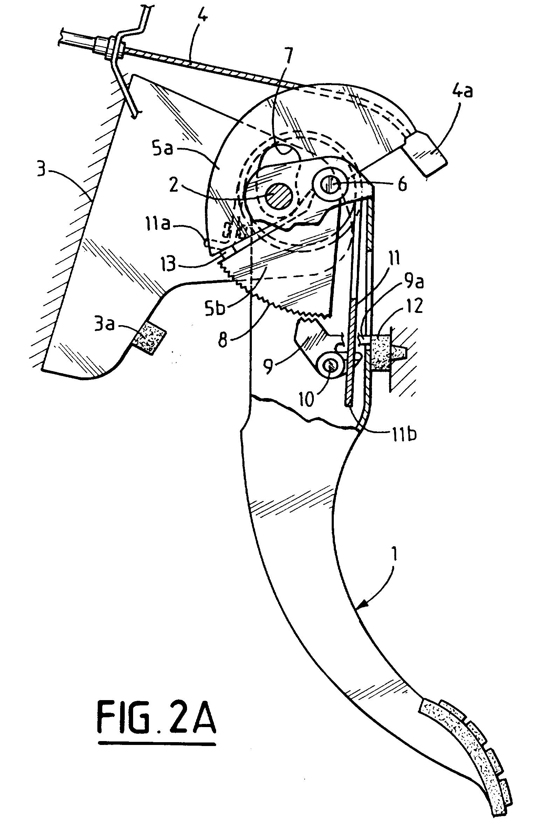

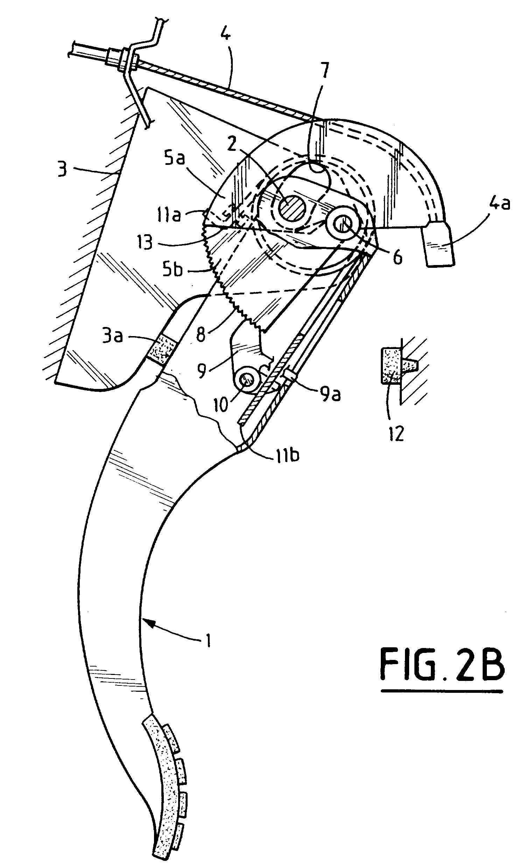

En se reportant aux figures 2A et 2B, représentant respectivement un premier mode de réalisation du dispositif proposé par l'invention en position embrayée et en position débrayée on retrouve la plupart des éléments de la figure 1, mais on constate que le secteur 5 de la figure 1 est remplacé par deux éléments de secteur 5a, 5b, pivotant sur la pédale 1 autour d'un axe commun 6, et réunis par un élément élastique de liaison 13, dans un état non comprimé sur la figure 2A, et comprimé sur la figure 2B. En effet, en phase de débrayage, (figure 2B) le second élément de secteur 5b est sollicité par le cliquet 9 sous l'action du ressort 11 contre le premier élément de secteur 5a, l'élément de liaison élastique 13 se comprimant en début de course entre les deux éléments 5a et 5b.

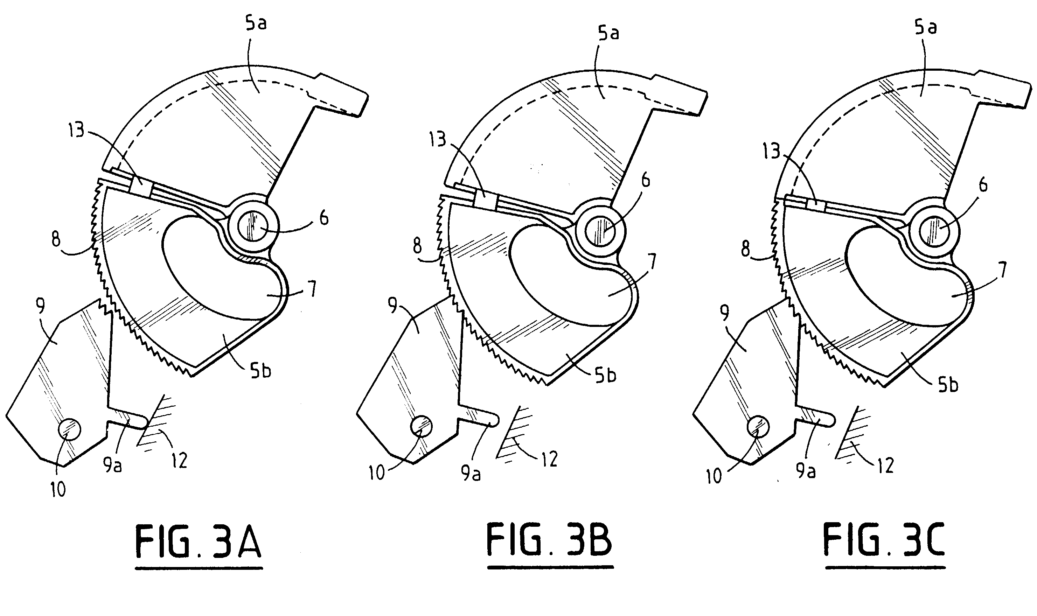

Les figures 3A, 3B, 3C, représentant uniquement certains éléments des figures 2A et 2B mettent en évidence le fonctionnement du dispositif proposé. Sur la figure 3a, c'est-à-dire au repos, (position embrayée) le cliquet 9 est à l'écart de la denture 8 de l'élément de secteur 5b, grâce à l'appui de son talon 9a sur la butée haute 12, qui équilibre le moment exercé par le ressort de rappel 11 autour de l'axe 6, tandis que l'élément de secteur 5b est maintenu en position angulaire autour de l'axe 6 par l'élément élastique de liaison 13, à l'écart de l'élément 5a. Au début du débrayage (figure 3B), le cliquet 9 vient à la rencontre de l'élément de secteur 5b. La faible résistance en rotation de l'élément de secteur 5b autour de l'axe 6, liée à la grande flexibilité de l'élément élastique 13, autorise son effacement en cas de prise de contact par les sommets de denture. L'engrènement du cliquet 9 sur l'élément de secteur 5b s'effectue alors sans à-coup. Lorsque l'enfoncement de la pédale d'embrayage se poursuit (figure 3C), les dentures du cliquet 9 et de l'élément de secteur 5b étant verrouillées, les deux éléments de secteur 5a et 5b sont en appui mutuel, et le débrayage se poursuit, comme si ces deux éléments ne formaient qu'une seule pièce, conformément à l'art antérieur.

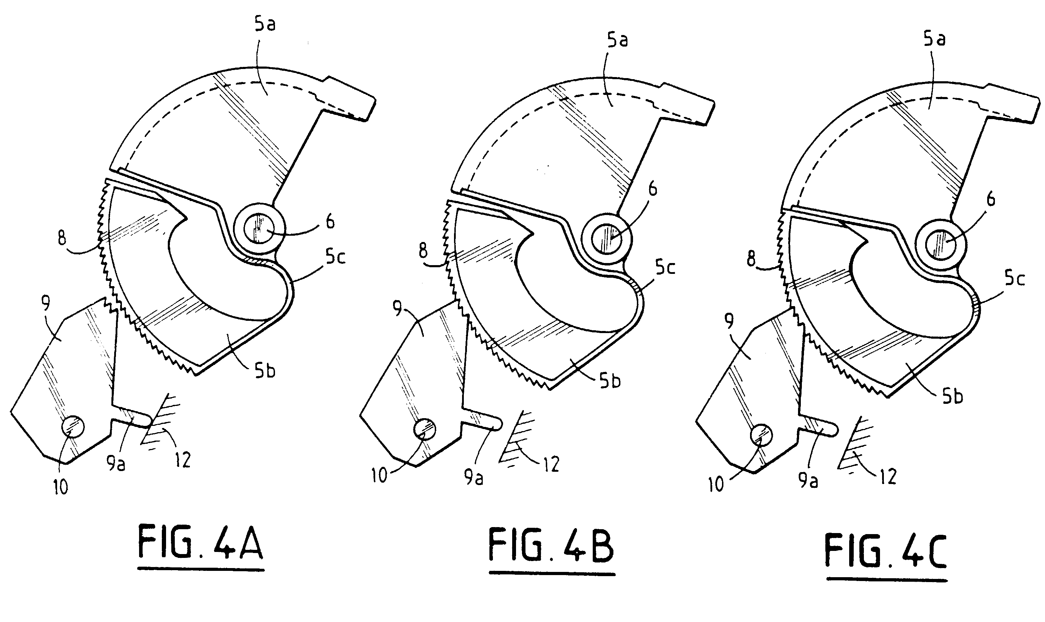

Les figure 4A, 4B et 4C illustrent un second mode de réalisation de l'invention, selon lequel les deux éléments de secteur 5a et 5b sont réunis par une partie intermédiaire flexible 5c à proximité de leur axe de rotation 6. La partie flexible 5c assure une liaison élastique entre les deux éléments 5a, 5b, propre à rappeler ces derniers à l'écart l'un de l'autre, comme l'élément élastique de liaison 13 du mode de réalisation précédent. En d'autres termes, les deux éléments de secteur 5a et 5b forment ici une pièce unique, dont la partie centrale souple 5c assure l'écartement élastique en rotation autour de l'axe 6 de ses deux éléments de secteur 5b, 5c.

En conclusion, l'invention permet de doter l'élément cranté attaqué par le cliquet lié à la pédale de débrayage, d'une certaine élasticité vis-à-vis de l'extrémité du câble. Ce résultat est obtenu notamment grâce à l'introduction d'un élément spécifique accroché à l'extrémité du câble, tournant autour du même axe que l'élément de secteur cranté et relié élastiquement à celui-ci. Cette disposition permet d'isoler la denture du secteur cranté de tous les termes de frottement liés à la commande par câble, qui ne franchissent pas cet élément spécifique. Elle favorise l'obtention d'un engrènement sans à-coup, à "fond de denture", entre le secteur cranté et le cliquet, supprimant ainsi le risque de traverser la course de la pédale sans débrayer, tout en limitant en fréquence et en intensité les nuisances acoustiques dues aux décrochages ponctuels de dentures.

## Revendications

1. Dispositif de commande d'embrayage par câble à rattrapage d'usure, comportant une pédale d'embrayage (1) pivotant sur une partie fixe (3) du châssis du véhicule autour d'un premier axe (2) entre une butée basse (3a) en fin de course de débrayage et une butée haute (12) en position de repos, un secteur cranté (5b) relié au câble de débrayage (4) et pivotant sur la pédale (1) autour d'un second axe de rotation (6), un cliquet (9) articulé autour d'un troisième axe (10) sur la pédale (1) et rencontrant la denture (8) de l'élément cranté (5b) lors du débrayage de façon à relier cinématiquement la pédale (1) au câble dans une position déterminée notamment par l'état d'usure de l'embrayage, et un moyen de rappel (11) de la pédale (1) et du secteur cranté (5b) dans leurs positions de repos, caractérisé en ce que l'élément de secteur cranté (5b) est relié élastiquement au câble (4).

2. Dispositif de commande d'embrayage selon la revendication 1, caractérisé en ce que l'élément de secteur cranté (5b) est relié élastiquement à un élément spécifique (5a), accroché à l'extrémité (4a) du câble de débrayage (4).

3. Dispositif de commande d'embrayage selon la revendication 2, caractérisé en ce que l'élément spécifique (5a) est un élément de secteur tournant sur la pédale (1) autour du même axe de rotation (6) que le secteur cranté (5b).

4. Dispositif de commande d'embrayage selon la revendication 3, caractérisé en ce que les deux éléments de secteur (5a, 5b), sont reliés par un élément de liaison élastique (5c, 13) rappelant élastiquement ces derniers à l'écart l'un de l'autre.

5. Dispositif de commande d'embrayage selon la revendication 4, caractérisé en ce que l'élément élastique de liaison (13) est disposé entre deux faces latérales des éléments de secteur (5a, 5b), de façon à être comprimé entre ces derniers lors de l'engrènement du cliquet (9) sur le secteur cranté (5b).

6. Dispositif de commande d'embrayage selon la revendication 4, caractérisé en ce que l'élément élastique de liaison (5c) est constitué par une partie flexible (5c) réunissant les deux éléments de secteur (5a, 5b) au voisinage de leur axe de rotation commun (6).

7. Dispositif de commande d'embrayage selon l'une des revendications précédentes, caractérisé en ce que le moyen de rappel (11) assure l'engrènement du cliquet (9) sur le secteur cranté (5b) lors du débrayage.

8. Dispositif de commande d'embrayage selon l'une des revendications précédentes, caractérisé en ce que l'appui du cliquet (9) sur la butée haute (12) assure le dégagement du cliquet (9) à l'écart du secteur cranté (5b) lors de l'embrayage.

9. Dispositif de commande d'embrayage selon l'une des revendications 3 à 8, caractérisé en ce que les deux éléments de secteur (5a, 5b) sont en appui mutuel après l'engrènement du cliquet (9) sur la denture (8).
